(19) Europäisches Patentamt
European Patent Office
Office européen des brevets

(11) **EP 3 730 291 B1**

(12) **EUROPEAN PATENT SPECIFICATION**

(45) Date of publication and mention
of the grant of the patent:
**05.04.2023  Bulletin 2023/14**

(21) Application number: **19753791.3**

(22) Date of filing: **13.02.2019**

(51) International Patent Classification (IPC):
**G06F 3/041** *(2006.01)*     **G02B 5/30** *(2006.01)*
**B32B 7/03** *(2019.01)*

(52) Cooperative Patent Classification (CPC):
**B32B 27/36; B26D 5/00; B32B 7/03; G02B 1/08;**
**G02B 1/14;** B32B 2307/42; B32B 2457/208

(86) International application number:
**PCT/CN2019/074920**

(87) International publication number:
**WO 2019/158065 (22.08.2019 Gazette 2019/34)**

(54) **PROTECTIVE FILM AND METHOD AND DEVICE FOR CUTTING PROTECTIVE FILM**

SCHUTZFOLIE UND VERFAHREN UND VORRICHTUNG ZUM SCHNEIDEN EINER SCHUTZFOLIE

FILM PROTECTEUR ET PROCÉDÉ ET DISPOSITIF DE COUPE DE FILM PROTECTEUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **13.02.2018  CN 201810150575**
**01.03.2018  CN 201810170848**

(43) Date of publication of application:
**28.10.2020  Bulletin 2020/44**

(60) Divisional application:
**23152516.3**

(73) Proprietor: **HUAWEI TECHNOLOGIES CO., LTD.**
**Shenzhen, Guangdong 518129 (CN)**

(72) Inventor: **LIN, Jiao**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(56) References cited:
**CN-A- 1 950 723      CN-A- 102 971 649**
**CN-A- 103 260 879      CN-A- 106 156 716**
**CN-A- 107 399 131      KR-A- 20140 080 188**
**US-A1- 2013 093 982**

EP 3 730 291 B1

## Description

### TECHNICAL FIELD

This application relates to an electronic device.

### BACKGROUND

In recent years, with development of electronic devices, a user usually performs filming to protect a screen of an electronic device, for example, applies a protective film onto the screen of the electronic device. However, some protective films are characterized by a birefringence effect. Therefore, when light passes through the protective film, a polarization property of light changes. For example, a polyethylene terephthalate (polyethylene terephthalate, PET) film is formed through extrusion, calendering, and biaxial stretching during manufacturing, but film forming implemented through biaxial stretching leads to anisotropy and crystallization. In this case, the birefringence effect is generated. When light passes through the PET film, a polarization property of the light changes. In this case, an operation of user identification performed by an optical sensor in an electronic device is affected. For example, user fingerprint recognition performed by the optical sensor is affected. Therefore, a protective film is urgently needed, so that an electronic device is less affected when the protective film is attached on a screen of the electronic device.

US 2013/0093982 discloses a liquid crystal display device including: a back light source, a liquid crystal cell, a color filter, a polarizer, and a polarizer protective film arranged in the stated order, wherein the polarizer protective film has a retardation of not less than 6000 nm, and a difference (nx-ny) of not less than 0.05 between a refractive index (nx) in a slow axis direction that is a highest refractive index direction and a refractive index (ny) in a fast axis direction that is orthogonal to the slow axis direction, and an absorption axis of the polarizer and the slow axis of the polarizer protective film are arranged to form an angle within a range of $0°\pm30°$ or $90°\pm30°$.

CN 106 156 716 A discloses a fingerprint identification system, the position of a first surface or a second surface of a glass cover board of the fingerprint identification system corresponding to a not less than 6000 nm, and a difference (nx-ny) of not less than 0.05 between a refractive index (nx) in a slow axis direction that is a highest refractive index direction and a refractive index (ny) in a fast axis direction that is orthogonal to the slow axis direction, and an absorption axis of the polarizer and the slow axis of the polarizer protective film are arranged to form an angle within a range of $0°\pm30°$ or $90°\pm30°$.

CN 106 156 716 A discloses a fingerprint identification system, the position of a first surface or a second surface of a glass cover board of the fingerprint identification system corresponding to a finger contact region is provided with a blind hole, the blind hole is used for making glass cover board thickness of the finger contact region be smaller than glass cover board thickness of other regions.

### SUMMARY

The present invention is as defined in the appended set of claims. Embodiments of this application provide a protective film, and a method finger contact region is provided with a blind hole, the blind hole is used for making glass cover board thickness of the finger contact region be smaller than glass cover board thickness of other regions.

### SUMMARY

The present invention is set out in the appended set of claims.

According to a first aspect, which is not part of the invention but an example for further understanding the invention, a protective film is provided. The protective film is characterized by a birefringence effect, and the protective film is attached on a screen of an electronic device.

A fast axis direction of the protective film is parallel with a polarization direction of a first polarizer in the touchscreen of the electronic device, and a slow axis direction of the protective film is perpendicular to the polarization direction of the first polarizer. Alternatively, a slow axis direction of the protective film is parallel with a polarization direction of a first polarizer, and a fast axis direction of the protective film is perpendicular to the polarization direction of the first polarizer. Alternatively, there is a 45-degree included angle between a polarization direction of a first polarizer and each of a fast axis direction and a slow axis direction of the protective film.

In this embodiment, if the fast axis direction of the protective film is parallel with the polarization direction of the first polarizer in the touchscreen, and the slow axis direction of the protective film is perpendicular to the polarization direction of the first polarizer, the slow axis direction of the protective film does not change a polarization direction of transmitted light, and a polarization direction of incident light is parallel with the fast axis direction of the protective film. Therefore, a polarization state when the incident light passes through the protective film does not change, so that impact of the protective film on the electronic device is reduced. This helps to improve user experience. If the fast axis direction of the protective film is perpendicular to the polarization direction of the first polarizer in the touchscreen, and the slow axis direction of the protective film is parallel with the polarization direction of the first polarizer, the fast axis direction of the protective film does not change a polarization direction of incident light, and a polarization direction of transmitted light is parallel with the slow axis direction of the protective film. Therefore, a polarization state when the incident light passes through the protective film does not change, so that impact of the protective film on the electronic device is reduced. This helps to improve user experience. If there is a 45-degree included angle between the polarization direction of the first polarizer and each of the fast axis direction and the slow axis direction of the protective film, the fast axis direction and the slow axis direction of the protective film do not change an amplitude of incident light, so that impact of the protective film on the electronic device is reduced.

Optionally, the first polarizer is a polarizer closest to the protective film in the electronic device, or the first polarizer is a last polarizer through which light emitted by a light-emitting element of the electronic device passes in a process in which the light arrives at the protective film.

Optionally, the protective film may be any protective film characterized by the birefringence effect.

In some implementations, if there is a 45-degree included angle between the polarization direction of the first polarizer and each of the fast axis direction and the slow axis direction of the protective film, a thickness of the protective film satisfies the following formula:

$$(n_{fast} - n_{slow}) * T = 1/2 * m * \lambda ,$$

where
$n_{fast}$ is a refractive index of the fast axis direction of the protective film, $n_{slow}$ is a refractive index of the slow axis direction of the protective film, $T$ is the thickness of the protective film, $m$ is a positive integer, and $\lambda$ is a refractive index.

In some implementations, the electronic device supports under-display fingerprint recognition.

In some implementations, the protective film is a PET film.

In some implementations, the protective film may be a composite film characterized by a birefringence effect. For example, the composite film may be a composite material film including a PET film and a TPU film.

According to a second aspect, which is not part of the invention but an example for further understanding the invention, a method for cutting a protective film is provided, including: detecting power of transmitted light generated when incident light arrives at a third polarizer sequentially through a second polarizer and a rotated protective film that is parallel with the second polarizer, and passes through the third polarizer, where the second polarizer and the third polarizer have a same polarization direction, and the protective film is characterized by a birefringence effect; determining a first fast axis direction or a first slow axis direction of the protective film based on the power of the transmitted light; and cutting the protective film along the first fast axis direction or the first slow axis direction, to obtain a cut protective film.

Therefore, in this embodiment, the incident light passes through the two polarizers with the same polarization direction, and the power of the transmitted light is considered in a process of cutting the protective film. In this way, when the first fast axis direction and the first slow axis direction of the protective film are determined, directions that impose smallest impact on the transmitted light may be selected as the fast axis direction and the slow axis direction of the protective film as much as possible, and the protective film is cut along the first fast axis direction and the first slow axis direction based on a requirement on a size of the protective film. This helps to reduce impact of the protective film on an electronic device.

Optionally, the polarization direction of the second polarizer is the same as a polarization direction of a first polarizer in an electronic device.

Optionally, the second polarizer is parallel with the third polarizer, and the second polarizer may be projected onto the third polarizer.

In some implementations, the determining a first fast axis direction or a first slow axis direction of the protective film based on the power of the transmitted light includes: determining a fast axis direction of the protective film that is corresponding to maximum power of the transmitted light as the first fast axis direction; or determining a slow axis direction of the protective film that is corresponding to maximum power of the transmitted light as the first slow axis direction.

In this way, when a cutting direction of the protective film is determined, the fast axis direction of the protective film that is corresponding to the maximum power of the transmitted light is selected as the first fast axis direction, or the slow axis direction of the protective film that is corresponding to the maximum transmitted light power is selected as the first slow axis direction. In other words, impact on the electronic device is smallest when the protective film is cut along the first fast axis direction or the first slow axis direction based on the requirement on the size of the protective film.

Optionally, a fast axis direction of the protective film that is corresponding to higher power of the transmitted light may alternatively be determined as the first fast axis direction. Optionally, a slow axis direction of the protective film that is corresponding to higher power of the transmitted light may alternatively be determined as the first slow axis direction. This is not limited in this embodiment.

Optionally, a rotation direction of the protective film may be determined based on a change status of the power of the transmitted light. For example, if the power of the transmitted light gradually decreases when the protective film is rotating clockwise, the rotation direction of the protective film may be changed into a counterclockwise direction.

In some implementations, after the first fast axis direction or the first slow axis direction of the protective film is determined, the first fast axis direction is parallel with the polarization direction of the second polarizer, and the first slow axis direction is perpendicular to the polarization direction of the second polarizer; or the first fast axis direction is perpendicular to the polarization direction of the second polarizer, and the first slow axis direction is parallel with the polarization direction of the second polarizer.

In some implementations, after the first fast axis direction or the first slow axis direction of the protective film is determined, there is a 45-degree included angle between the polarization direction of the second polarizer and each of the first fast axis direction and the first slow axis direction, and a thickness of the cut protective film satisfies the following formula:

$$(n_{fast} - n_{slow}) * T = 1/2 * m * \lambda ,$$

where

$n_{fast}$ is a refractive index of the fast axis direction of the protective film, $n_{slow}$ is a refractive index of the slow axis direction of the protective film, $T$ is the thickness of the protective film, $m$ is a positive integer, and $\lambda$ is a refractive index.

In some implementations, the cut protective film is attached on a screen of the electronic device that supports under-display fingerprint recognition, and the first polarizer in the touchscreen of the electronic device has the same polarization direction as the second polarizer.

In this embodiment, the cut protective film is applied on the screen of the electronic device that supports under-display fingerprint recognition, and the first polarizer in the touchscreen has the same polarization direction as the second polarizer. In this way, when the cut protective film is applied on the electronic device, the cut protective film does not affect a fingerprint recognition effect, or impact of the protective film on a fingerprint recognition effect can be reduced.

In some implementations, the protective film is a PET film.

In some implementations, the protective film may be a composite film characterized by a birefringence effect. For example, the composite film may be a composite material film including a PET film and a TPU film.

According to a third aspect, which is not part of the invention but an example for further understanding the invention, an electronic device is provided. The electronic device supports under-display fingerprint recognition, and the protective film according to any one of the second aspect or the possible implementations of the second aspect is attached on a screen of the electronic device.

According to a fourth aspect, which is not part of the invention but an example for further understanding the invention, an apparatus for cutting a protective film is provided, including: a detection unit, configured to detect power of transmitted light generated when incident light arrives at a third polarizer through a second polarizer and a rotated protective film that is parallel with the second polarizer, and passes through the third polarizer, where the second polarizer and the third polarizer have a same polarization direction, and the protective film is characterized by a birefringence effect; a determining unit, configured to determine a first fast axis direction or a first slow axis direction of the protective film based on the power of the transmitted light; and a cutting unit, configured to cut the protective film along the first fast axis direction or the first slow axis direction, to obtain a cut protective film.

In some implementations, the determining unit is specifically configured to: determine a fast axis direction of the protective film that is corresponding to maximum power of the transmitted light as the first fast axis direction; or determine a slow axis direction of the protective film that is corresponding to maximum power of the transmitted light as the first slow axis direction.

In some implementations, after the first fast axis direction or the first slow axis direction of the protective film is determined, the first fast axis direction is parallel with the polarization direction of the second polarizer, and the first slow axis direction is perpendicular to the polarization direction of the second polarizer; or the first fast axis direction is perpendicular to the polarization direction of the second polarizer, and the first slow axis direction is parallel with the polarization direction of the second polarizer.

In some implementations, after the first fast axis direction or the first slow axis direction of the protective film is determined, there is a 45-degree included angle between the polarization direction of the second polarizer and each of the first fast axis direction and the first slow axis direction, and a thickness of the cut protective film satisfies the following formula:

$$(n_{fast} - n_{slow}) * T = 1/2 * m * \lambda$$,

where

$n_{fast}$ is a refractive index of the fast axis direction of the protective film, $n_{slow}$ is a refractive index of the slow axis direction of the protective film, $T$ is the thickness of the protective film, $m$ is a positive integer, and $\lambda$ is a refractive index.

In some implementations, the cut protective film is attached on a screen of an electronic device that supports under-display fingerprint recognition, and a first polarizer in the touchscreen of the electronic device has a same polarization direction as the second polarizer.

In some implementations, the protective film is a PET film.

According to a fifth aspect, which is not part of the invention but an example for further understanding the invention, a computer readable storage medium is provided. The computer readable storage medium stores an instruction, and when the instruction is run on a computer, the computer is enabled to perform the method according to the first aspect or any possible implementation of the first aspect.

According to a sixth aspect, which is not part of the invention but an example for further understanding the invention, a computer program product including an instruction is provided. When the computer program product is run on a computer, the computer is enabled to perform the method according to the first aspect or any possible implementation of the first aspect.

According to a seventh aspect, which is according to the invention, an electronic device is provided. The electronic device supports under-display fingerprint recognition, a protective film is applied on a touchscreen of the electronic device, the protective film includes a first axis and a second axis, and the first axis is perpendicular to the second axis, where

there is a 45-degree included angle between a polarization direction of a first polarizer and each of the first axis and the second axis of the protective film;

wherein if there is a 45-degree included angle between the polarization direction of the first polarizer and each of the first axis and the second axis of the protective film, a thickness of the protective film satisfies the following formula:

$$(n_{fast} - n_{slow}) * T = 1/2 * m * \lambda$$,

where

$n_{fast}$ is a refractive index of a fast axis direction of the protective film, $n_{slow}$ is a refractive index of a slow axis direction of the protective film, $T$ is the thickness of the protective film, $m$ is a positive integer, and $\lambda$ is a refractive index.

In some implementations, the protective film is a polyethylene terephthalate PET film.

In some implementations, the first axis is a fast axis, and the second axis is a slow axis.

In some implementations, the first polarizer in the touchscreen is a last polarizer through which light emitted by a light-emitting element of the electronic device passes in a process in which the light arrives at the protective film.

In the foregoing implementations, the electronic device may be a mobile phone, a watch, or glasses.

## BRIEF DESCRIPTION OF DRAWINGS

FIG. 1 is a schematic diagram of a principle of an under-display fingerprint recognition technology according to an embodiment of this application;

FIG. 2 is a schematic diagram of an electronic device that supports an under-display fingerprint recognition technology according to an embodiment of this application;

FIG. 3 is a schematic diagram of a polarization direction of a polarizer according to an embodiment of this application;

FIG. 4 is a schematic diagram of a method for cutting a protective film according to an embodiment, which is not part of the invention but an example for further understanding the invention, of this application;

FIG. 5 is a schematic diagram of power detection of transmitted light according to an embodiment, which is not part of the invention but an example for further understanding the invention, of this application;

FIG. 6 is a schematic diagram of a protective film attached on a screen of an electronic device according to an embodiment of this application;

FIG. 7 is a schematic diagram of an optical path when a prior-art protective film is applied on a mobile phone;

FIG. 8 is a schematic diagram of an optical path when a protective film according to an embodiment of this application is applied on a mobile phone;
FIG. 9 is a schematic block diagram of an apparatus for cutting a protective film according to an embodiment of this application; and
FIG. 10 is a schematic block diagram of another apparatus for cutting a protective film according to an embodiment of this application.

## DESCRIPTION OF EMBODIMENTS

The following describes technical solutions in embodiments with reference to accompanying drawings.

In a possible application scenario, a cut protective film in the embodiments of this application is attached on a screen of an electronic device that can support an under-display fingerprint recognition technology.

The following describes a principle of the under-display fingerprint recognition technology.

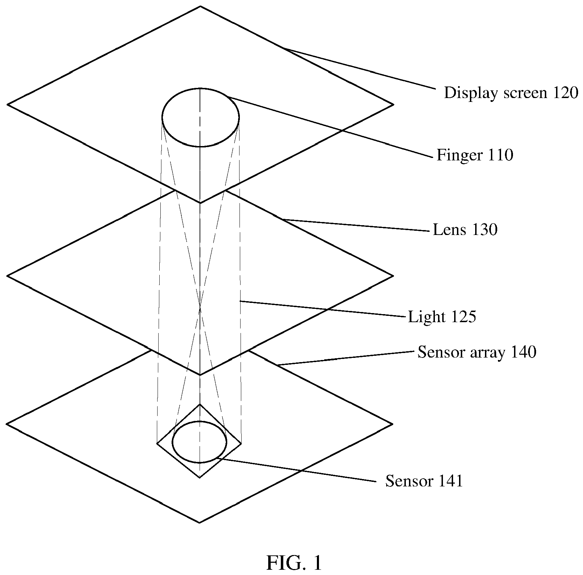

As shown in FIG. 1, the under-display fingerprint recognition technology includes the following steps: Light emitted by a touchscreen 120 falls on a finger 110; a fingerprint of the finger 110 reflects the light; light 125 reflected from the fingerprint of the finger 110 passes through a light-transmissive gap in the touchscreen 120, and is projected onto a sensor array 140 under a convergence effect of a lens 130; and a sensor 141 of the sensor array 140 converts an optical signal projected onto the sensor 141 into an electrical signal, to generate fingerprint data.

The following describes an electronic device that supports the under-display fingerprint recognition technology.

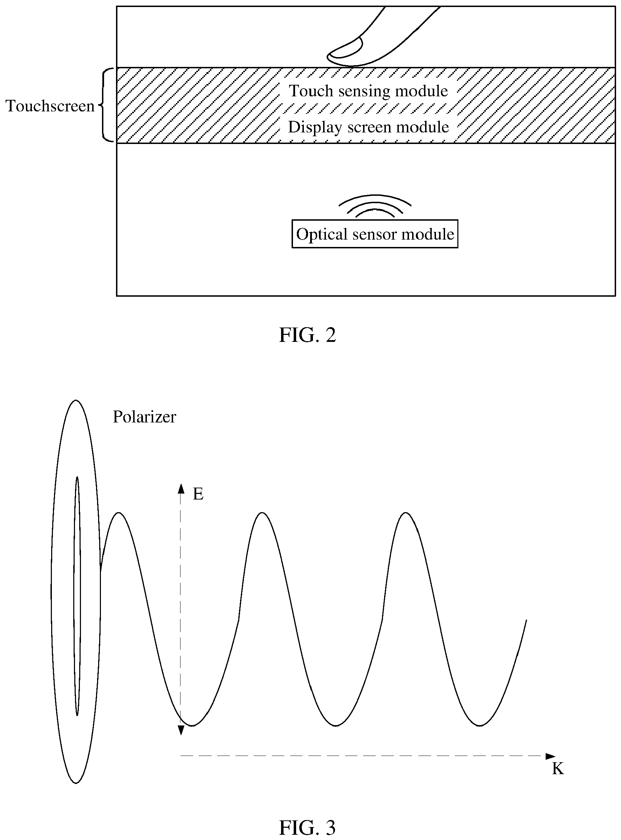

As shown in FIG. 2, the electronic device that supports the under-display fingerprint recognition technology includes a touchscreen (also referred to as a screen) and an optical sensor module. The optical sensor module is disposed under the touchscreen. Specifically, the touchscreen is parallel or approximately parallel with a plane of the optical sensor. A projection of the optical sensor module on the touchscreen is located in a first area, and the first area is a part or all of an area of the touchscreen. The touchscreen includes a touch sensing screen module with a touch sensing layer on the top, and a touchscreen module located under the touch sensing screen module. The optical sensor module may include a lens and a sensor array. The optical sensor module is coupled to the touchscreen module and located under the touchscreen, to receive and capture returned light from a top surface of the touch sensing screen module, and image the returned light onto an optical sensing pixel or an optical sensor array of a photoelectric detector. The optical sensor module may convert an optical image in the returned light into a pixel signal for further processing.

Touchscreen modules are usually classified into a liquid crystal display (liquid crystal display, LCD) screen and an organic light-emitting diode (organic light-emitting diode, OLED) touchscreen according to a light emission principle. To control a polarization direction of light, polarizers are added to the LCD screen and the OLED screen. Therefore, all emergent light of the touchscreen module has a polarization property. With development of electronic devices, to prevent a screen of an electronic device from being contaminated or damaged, a user usually applies a protective film onto the screen of the electronic device to protect the screen of the electronic device. For example, the user may apply a tempered glass film, a thermoplastic polyurethanes (thermoplastic polyurethanes, TPU) film, or a PET film. The PET film is formed through extrusion, calendering, and biaxial stretching during manufacturing, but film forming implemented through biaxial stretching leads to anisotropy and crystallization. In this case, a birefringence effect is generated. When light from the touchscreen passes through the PET film, a polarization property changes. When light reflected from a finger passes through a polarizer again, a part of the light is blocked, causing an optical signal to weaken. In this case, an operation of user identification performed by the electronic device is affected. For example, the PET film has an effect of a quarter-wave plate. When the light is reflected back after passing through the protective film and arriving at a surface of the finger, the polarization direction of the light is properly rotated by 90 degrees. In this case, the light is completely shielded by the polarizer and cannot pass through the polarizer, and consequently an optical sensor cannot obtain any fingerprint data. Consequently, application of the under-display fingerprint recognition technology is limited.

In the embodiments of this application, a polarizer has a function of shielding and transmitting incident light. For example, for a transverse wave, a polarization direction is perpendicular to a propagation direction. As shown in FIG. 3, a propagation direction of incident light that passes through a polarizer is K, and a polarization direction is E.

In the embodiments of this application, a protective film has a fast axis direction and a slow axis direction after being manufactured. In the protective film, a light vector (Light vector) direction with a low propagation velocity is the slow axis, and a light vector direction with a high propagation velocity is the fast axis.

In view of the foregoing problems, the embodiments provide a method for cutting a protective film. According to the method, a first fast axis direction and a first slow axis direction of the protective film are determined based on power of transmitted light that passes through two polarizers with a same polarization direction and the protective film between the two polarizers. For example, a fast axis direction of the protective film that is corresponding to higher or maximum transmitted light power may be determined as the first fast axis direction; or a slow axis direction of the protective film that is corresponding to higher or maximum transmitted light power may be determined as the first slow axis direction. In this case, on the premise that a requirement on a size of a cut protective film is known, cutting the protective film along the first fast axis direction or the first slow axis direction is equivalent to cutting the protective film along the first fast axis direction or the first slow axis direction that causes higher or maximum transmitted light power. In other words, during rotation of the protective film, after incident light passes through the protective film, a direction that imposes smallest impact on the incident light is the first fast axis direction or the first slow axis direction of the protective film, and a polarization direction of a polarizer in a touchscreen of an electronic device is the same as the polarization direction of the two polarizers during cutting. In this way, when the cut protective film is applied on the electronic device, impact on fingerprint data is reduced.

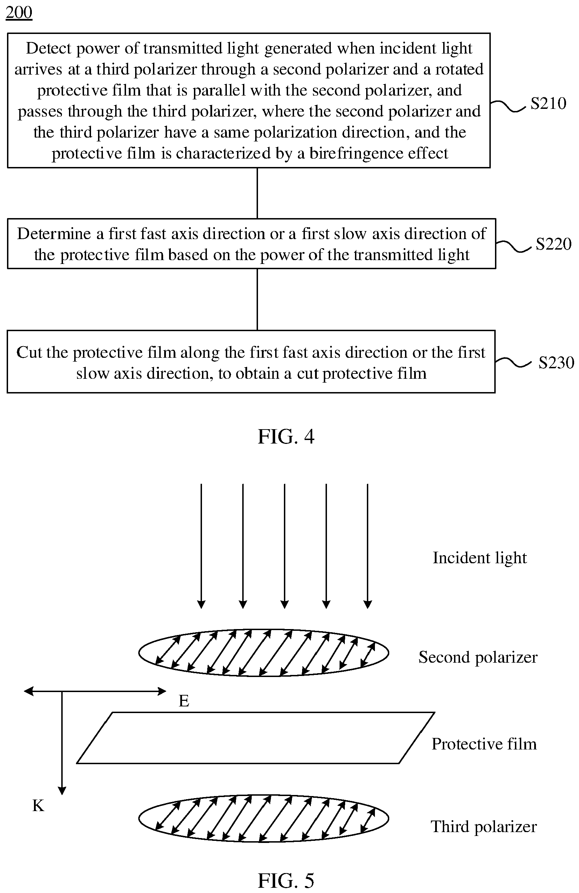

The following describes a method 200 for cutting a protective film according to an embodiment, with reference to FIG. 4. The method 200 includes the following steps.

S210. Detect power of transmitted light generated when incident light arrives at a third polarizer through a second polarizer and a rotated protective film that is parallel with the second polarizer, and passes through the third polarizer, where the second polarizer and the third polarizer have a same polarization direction, and the protective film is characterized by a birefringence effect.

Optionally, the protective film may be any protective film that is characterized by the birefringence effect. For example, the protective film may be a PET film, or a composite film characterized by a birefringence effect. For example, the composite film may be a composite material film including a PET film and a TPU film. The birefringence effect is caused by characteristics of a material of the protective film. The birefringence effect may be generated by a first fast axis and a first slow axis.

Optionally, the second polarizer and the third polarizer may be linear polarizers.

Optionally, the second polarizer and the third polarizer have the same polarization direction, and a propagation direction of incident light passing through the second polarizer is the same as that of incident light passing through the third polarizer.

The second polarizer, the protective film, and the third polarizer are parallel with each other.

S220. Determine a first fast axis direction or a first slow axis direction of the protective film based on the power of the transmitted light.

In this embodiment, while the protective film is rotating parallel with the second polarizer, a fast axis direction and a slow axis direction of the protective film are constantly changing. In S220, the first fast axis direction and the first slow axis direction need to be determined in the fast axis direction and the slow axis direction of the protective film that are constantly changing.

In an optional embodiment, S220 includes: determining a fast axis direction of the protective film that is corresponding to maximum power of the transmitted light as the first fast axis direction; or determining a slow axis direction of the protective film that is corresponding to maximum power of the transmitted light as the first slow axis direction. Optionally, a fast axis direction of the protective film that is corresponding to higher power of the transmitted light is determined as the first fast axis direction; or a slow axis direction of the protective film that is corresponding to higher power of the transmitted light is determined as the first slow axis direction.

Optionally, the maximum transmitted light power can be determined only after the protective film is rotated by 180 degrees. Optionally, when the power of the transmitted light gradually increases and then gradually decreases, a fast axis direction of the protective film that is corresponding to maximum power of the transmitted light in this change process may be determined as the first fast axis direction; or a slow axis direction of the protective film that is corresponding to maximum power of the transmitted light in this change process may be determined as the first slow axis direction.

For example, as shown in FIG. 5, incident light passes through a second polarizer, then passes through a rotating protective film, and finally passes through a third polarizer. Power of transmitted light that finally passes through the third polarizer is detected, and a first fast axis direction or a first slow axis direction of the protective film is determined based on the power of the transmitted light. For example, a fast axis direction of the protective film that is corresponding to maximum power of the transmitted light may be determined as the first fast axis direction; or a slow axis direction of the protective film that is corresponding to maximum power of the transmitted light may be determined as the first slow axis direction. In FIG. 5, K is a propagation direction of the incident light passing through the second polarizer and the third polarizer, and E is a polarization direction of the incident light passing through the second polarizer and the third polarizer.

In an optional embodiment, the method further includes: determining a rotation direction of the protective film based on the power of the transmitted light. For example, when the power of the transmitted light gradually decreases, the rotation direction of the protective film may be changed; when the power of the transmitted light gradually increases, the rotation direction of the protective film may not be changed. For example, if it is detected that the power of the transmitted light gradually decreases when the protective film is rotating clockwise in a plane parallel with the second polarizer, the protective film rotates counterclockwise in the plane parallel with the second polarizer.

After the fast axis direction of the protective film that is corresponding to the maximum power of the transmitted light is determined as the first fast axis direction, or the slow axis direction of the protective film that is corresponding to the maximum power of the transmitted light is determined as the first slow axis direction, a relationship between the first fast axis direction or the first slow axis direction and the polarization direction of the second polarizer may include the following several cases:

In a first case, which is not part of the invention but an example for further understanding the invention, the first fast axis direction is parallel with the polarization direction of the second polarizer, and the first slow axis direction is perpendicular to the polarization direction of the second polarizer, where the first fast axis direction is perpendicular to the first slow axis direction. In this case, when the incident light passes through the second polarizer and then passes through the protective film, the first slow axis direction does not change the polarization direction of the transmitted light, and the polarization direction of the transmitted light is parallel with the first fast axis direction. Therefore, a polarization state when the incident light passes through the protective film does not change.

In a second case, which is not part of the invention but an example for further understanding the invention, the first fast axis direction is perpendicular to the polarization direction of the second polarizer, and the first slow axis direction is parallel with the polarization direction of the second polarizer, where the first fast axis direction is perpendicular to the first slow axis direction. In this case, when the incident light passes through the second polarizer and then passes through the protective film, the first fast axis direction does not change the polarization direction of the transmitted light, and the polarization direction of the transmitted light is parallel with the first slow axis direction. Therefore, a polarization state when the incident light passes through the protective film does not change.

In a third case, which is according to the invention, there is a 45-degree included angle between the polarization direction of the second polarizer and each of the first fast axis direction and the first slow axis direction, and a thickness of a cut protective film satisfies the following formula:

$$(n_{fast} - n_{slow}) * T = 1/2 * m * \lambda ,$$

where

$n_{fast}$ is a refractive index of the fast axis direction of the protective film, $n_{slow}$ is a refractive index of the slow axis direction of the protective film, $T$ is the thickness of the protective film, $m$ is a positive integer, and $\lambda$ is a refractive index. The fast axis direction of the protective film is perpendicular to the slow axis direction of the protective film.

S230. Cut the protective film along the first fast axis direction or the first slow axis direction, to obtain the cut protective film.

Specifically, after the first fast axis direction or the first slow axis direction is determined, the protective film may be cut based on a cutting size of the protective film. For example, a screen size of an electronic device is fixed, the cutting size is also fixed after the first fast axis direction or the first slow axis direction is determined. In this case, the protective film is cut based on the cutting size along the first fast axis direction or the first slow axis direction, to obtain the cut protective film. The cut protective film is attached on a screen of the electronic device.

Optionally, the protective film is a PET film. Certainly, the protective film may alternatively be a composite film characterized by a birefringence effect. For example, the composite film may be a composite material film including a PET film and a TPU film.

The following provides descriptions by using an example in which the protective film is a PET film.

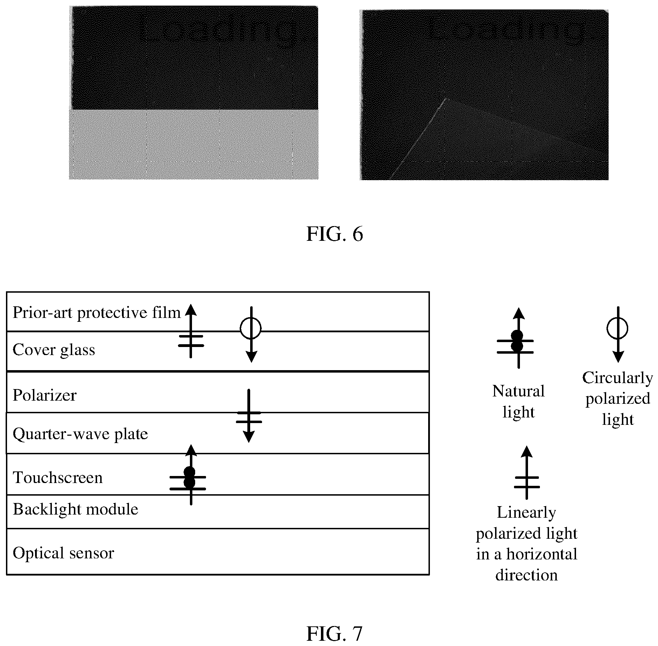

A polarization direction of a polarizer in the touchscreen of the electronic device is perpendicular to an emergent light direction of the screen. As shown in FIG. 6, no PET film is applied on an upper half of a screen of an electronic device in the left figure, and it can be seen that there is almost no transmitted light; a randomly cut PET film is applied on a lower half of the screen of the electronic device in the left figure, and it can be seen that a part of light is transmitted because a polarization state of the transmitted light is changed due to the PET film. In the right part of FIG. 6, the PET film in the right figure is applied on the screen of the electronic device after being cut along a specific fast axis direction or slow axis direction that is selected, and it can be seen that there is no obvious difference in the transmitted light between a position with the film and a position without the film. This is equivalent to that the PET film that is cut based on power of the transmitted light does not affect a polarization state of emergent light of the screen. Therefore, in the under-display fingerprint recognition technology, light reflected from a finger can well pass through the touchscreen to reach an optical sensor module.

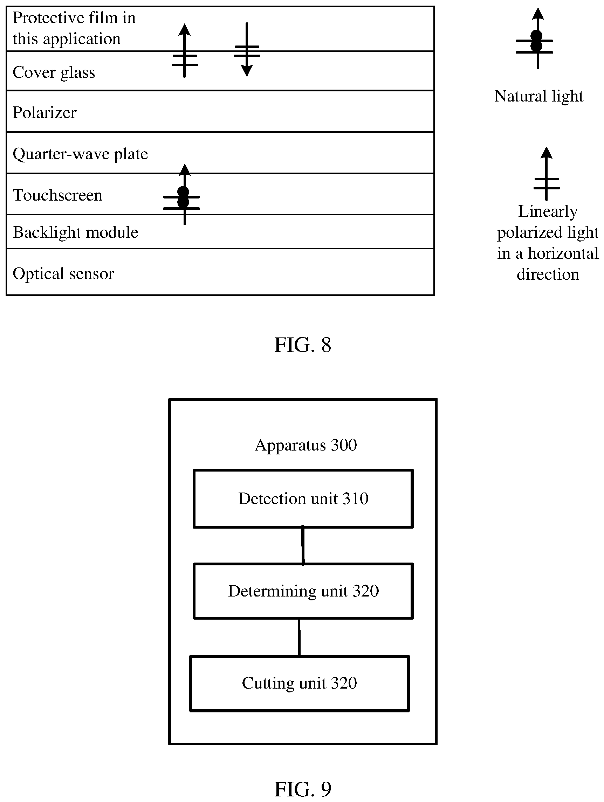

For example, FIG. 7 is a schematic diagram of an optical path when a prior-art protective film is applied on a mobile phone in a fingerprint recognition technology. The protective film is characterized by a birefringence effect, and a polarization direction of a polarizer is a horizontal direction parallel with a paper. When light (including light in the horizontal direction parallel with the paper and light in a vertical direction perpendicular to the paper) is to pass through the polarizer, only the light in the horizontal direction can pass through the polarizer, and the light in the vertical direction cannot pass through the polarizer. Because the protective film is randomly cut, when the light in the horizontal direction reaches the prior-art PET protective film, linearly polarized light becomes circularly polarized light due to the birefringence effect of the PET film; when the light is to pass through the linear polarizer again after being reflected from a finger, the light in the vertical direction cannot pass through the linear polarizer, causing an energy loss of the light reflected from the finger. As a result, fingerprint data is inaccurate. FIG. 8 is a schematic diagram of an optical path when a protective film according to an embodiment of this application is applied on a mobile phone in a fingerprint recognition technology. The protective film is cut according to the method in the embodiments. When light is to pass through a polarizer, only light in a horizontal direction can pass through the polarizer, and light in a vertical direction cannot pass through the polarizer. A fast axis direction of the protective film is parallel with or perpendicular to a polarization direction of the polarizer or there is a 45-degree included angle between a fast axis direction of the protective film and a polarization direction of the polarizer, or a slow axis direction of the protective film is parallel with or perpendicular to a polarization direction of the polarizer or there is a 45-degree included angle between a slow axis direction of the protective film and a polarization direction of the polarizer. Therefore, when the light in the horizontal direction passes through the protective film, the protective film does not change a polarization state of the light, and light reflected from a finger is still in the horizontal direction. Therefore, the protective film imposes relatively small impact or even no impact on fingerprint data. It can be understood that, for an LCD screen, light is light emitted by a backlight module, and for an OLED screen, light is light emitted by an emissive layer.

Table 1 shows four PET films A, B, C, and D. The first column represents the four PET films. The second column represents an extinction ratio when no protective film is applied on an electronic device. The third column represents extinction ratios when the four protective films are directly attached on a screen of the electronic device based on product directions of the protective films. The fourth column represents specific angles by which the protective films are rotated along the product directions (rotated along central axes of the protective films). The fifth column represents extinction ratios when the protective films are applied on the screen of the electronic device after being rotated by the specific angles and then being cut. It can be seen that the extinction ratios are all increased after the four different films are rotated by the specific angles.

**Table 1**

| PET film | Extinction ratio without any film | Extinction ratio with a film | Rotation angle | Extinction ratio when a film is applied after being rotated by a specific angle |
|---|---|---|---|---|
| A | 13 dB to 14 dB | 6.6 dB | 25 | 11 dB to 12 dB |
| B | 13 dB to 14 dB | 10 dB | 15 | 11 dB to 12 dB |
| C | 13 dB to 14 dB | 5.6 dB | 30 | 11 dB to 12 dB |
| D | 13 dB to 14 dB | 7.2 dB | 25 | 11 dB to 12 dB |

Optionally, the cut protective film is applied on the screen of the electronic device that supports the under-display fingerprint recognition technology. A first polarizer in the touchscreen of the electronic device has a same polarization direction as that of the second polarizer. In other words, the second polarizer and the third polarizer that are used when the protective film is cut have the same polarization direction as that of the first polarizer in the touchscreen of the electronic device. In this way, the polarization direction of the polarizer in the electronic device is not affected when the cut protective film is applied on the electronic device, so as to reduce impact of the protective film on a fingerprint recognition effect. Optionally, when polarizers in different electronic devices have different polarization directions, cutting directions of protective films on screens of the different electronic devices may also be different. For example, if a polarization direction of a first polarizer in a first electronic device is a first polarization direction, polarization directions of a second polarizer and a third polarizer are also the first polarization direction, and in this case, a fast axis direction of a protective film may be determined as a fast axis direction 1, or a slow axis direction of the protective film may be determined as a slow axis direction 1; if a polarization direction of a first polarizer in a second electronic device is a second polarization direction, polarization directions of a second polarizer and a third polarizer are also the second polarization direction, and in this case, a fast axis direction of a protective film may be determined as a fast axis direction 2, or a slow axis direction of the protective film may be determined as a slow axis direction 2.

The foregoing describes the method for cutting a protective film according to the embodiments, with reference to FIG. 3 to FIG. 8. The following describes a protective film.

An embodiment provides a protective film. The protective film is characterized by a birefringence effect, and the protective film is attached on a screen of an electronic device. There may be the following several cases for a relationship between a fast axis direction or slow axis direction of the protective film and a polarization direction of a first polarizer in the touchscreen of the electronic device. It should be understood that, the touchscreen of the electronic device may have one or more polarizers, where the first polarizer is a polarizer that is close to the screen of the electronic device; or the first polarizer may be a last polarizer through which light emitted by a light-emitting element of the electronic device passes in a process in which the light arrives at the protective film. For an electronic device with an LCD screen, a light-emitting element may be a backlight module; and for an electronic device with an OLED screen, a light-emitting element may be light emitted by an emissive layer.

Optionally, the electronic device may support various optical recognition technologies on the screen, for example, an under-display fingerprint recognition technology. The under-display fingerprint recognition technology is also referred to as an invisible fingerprint recognition technology, and is a technology in which a fingerprint recognition unlocking process is completed under screen glass. In the under-display fingerprint recognition technology, penetration technologies such as ultrasonic and optical penetration technologies are mainly used to penetrate a variety of different materials, so as to implement fingerprint recognition.

In a first case, which is not part of the invention but an example for further understanding the invention, the fast axis direction of the protective film is parallel with the polarization direction of the first polarizer in the touchscreen of the electronic device, and the slow axis direction of the protective film is perpendicular to the polarization direction of the first polarizer in the touchscreen of the electronic device, where the fast axis direction of the protective film is perpendicular to the slow axis direction of the protective film.

In a second case, which is not part of the invention but an example for further understanding the invention, the slow axis direction of the protective film is parallel with the polarization direction of the first polarizer in the touchscreen of the electronic device, and the fast axis direction of the protective film is perpendicular to the polarization direction of the first polarizer in the touchscreen of the electronic device, where the fast axis direction of the protective film is perpendicular to the slow axis direction of the protective film.

In a third case, which is according to the invention, there is a 45-degree included angle between the polarization direction of the first polarizer in the touchscreen of the electronic device and each of the fast axis direction and the slow axis direction of the protective film.

In the third case, a thickness of the protective film satisfies the following formula:

$$(n_{fast} - n_{slow}) * T = 1/2 * m * \lambda,$$

where

$n_{fast}$ is a refractive index of the fast axis direction of the protective film, $n_{slow}$ is a refractive index of the slow axis direction of the protective film, $T$ is the thickness of the protective film, $m$ is a positive integer, and $\lambda$ is a refractive index.

In a possible implementation, an embodiment of this application provides an electronic device. The electronic device supports an under-display fingerprint recognition technology, and the foregoing protective film is attached on a screen of the electronic device.

It should be understood that, in the embodiments, perpendicular is not absolutely perpendicular. That A is perpendicular to B may be that a range of an included angle between A and B is [90-a, 90+a]. Likewise, parallel is not absolutely parallel. That A is parallel with B may be that a range of an included angle between A and B is [0, b]. A 45-degree included angle between A and B is not an absolute 45-degree included angle. That there is a 45-degree included angle between A and B may be that a range of an included angle between A and B is [45-c, 45+c]. For example, a may be 5, b may be 4, and c may be 3; a, b, and c may be 5; a may be 6, b may be 3, and c may be 6; or a, b, and c may be 15.

The following provides descriptions by using an example in which a may be 5, b may be 4, and c may be 3.

For example, that the fast axis direction of the protective film is parallel with the polarization direction of the first polarizer in the touchscreen of the electronic device may be that a range of an included angle between the fast axis direction of the protective film and the polarization direction of the first polarizer is [0, b], where b may be 4. For example, the included angle between the fast axis direction of the protective film and the polarization direction of the first polarizer is 0 degrees, 2 degrees, or 4 degrees, which all should be understood as that the fast axis direction of the protective film in this embodiment is parallel with the polarization direction of the first polarizer in the touchscreen of the electronic device.

For another example, that the slow axis direction of the protective film is perpendicular to the polarization direction of the first polarizer may be that a range of an included angle between the slow axis direction of the protective film and the polarization direction of the first polarizer is [90-a, 90+a], where a may be 5. For example, the included angle between the slow axis direction of the protective film and the polarization direction of the first polarizer is 85 degrees, 88 degrees, 90 degrees, 93 degrees, or 95 degrees, which all should be understood as that the slow axis direction of the protective film in this embodiment is perpendicular to the polarization direction of the first polarizer.

For another example, that there is a 45-degree included angle between the polarization direction of the first polarizer and each of the fast axis direction and the slow axis direction of the protective film may be that a range of an included angle between polarization direction of the first polarizer and the fast axis direction of the protective film is [45-c, 45], and a range of an included angle between polarization direction of the first polarizer and the slow axis direction of the protective film is [45, 45+c], where c may be 3. For example, the included angle between polarization direction of the first polarizer and the fast axis direction of the protective film is 42 degrees, and the included angle between polarization direction of the first polarizer and the slow axis direction of the protective film is 48 degrees; or the included angle between polarization direction of the first polarizer and the fast axis direction of the protective film is 44 degrees, and the included angle between polarization direction of the first polarizer and the slow axis direction of the protective film is 46 degrees, which all should be understood as that there is a 45-degree included angle between the polarization direction of the first polarizer in this embodiment of this application and each of the fast axis direction and the slow axis direction of the protective film. As shown in FIG. 9, an embodiment provides an apparatus 400 for cutting a protective film, including:

a detection unit 310, configured to detect power of transmitted light generated when incident light arrives at a third polarizer through a second polarizer and a rotated protective film that is parallel with the second polarizer, and passes through the third polarizer, where the second polarizer and the third polarizer have a same polarization direction, and the protective film is characterized by a birefringence effect;
a determining unit 320, configured to determine a first fast axis direction or a first slow axis direction of the protective film based on the power of the transmitted light; and
a cutting unit 330, configured to cut the protective film along the first fast axis direction or the first slow axis direction, to obtain a cut protective film.

In an optional embodiment, the determining unit 420 is specifically configured to: determine a fast axis direction of the protective film that is corresponding to maximum power of the transmitted light as the first fast axis direction; or determine a slow axis direction of the protective film that is corresponding to maximum power of the transmitted light as the first slow axis direction.

In an optional embodiment, which is not part of the invention but an example for further understanding the invention, after the first fast axis direction or the first slow axis direction of the protective film is determined, the first fast axis direction is parallel with the polarization direction of the second polarizer, and the first slow axis direction is perpendicular to the polarization direction of the second polarizer; or the first fast axis direction is perpendicular to the polarization direction of the second polarizer, and the first slow axis direction is parallel with the polarization direction of the second polarizer.

In an embodiment, which is according to the invention, after the first fast axis direction or the first slow axis direction of the protective film is determined, there is a 45-degree included angle between the polarization direction of the second polarizer and each of the first fast axis direction and the first slow axis direction, and a thickness of the cut protective film satisfies the following formula:

$$(n_{fast} - n_{slow}) * T = 1/2 * m * \lambda,$$

where
$n_{fast}$ is a refractive index of the fast axis direction of the protective film, $n_{slow}$ is a refractive index of the slow axis direction of the protective film, $T$ is the thickness of the protective film, $m$ is a positive integer, and $\lambda$ is a refractive index.

In an optional embodiment, the cut protective film is attached on a screen of an electronic device that supports an under-display fingerprint recognition technology. A first polarizer in the touchscreen of the electronic device has a same polarization direction as that of the second polarizer.

In an optional embodiment, the protective film is a polyethylene terephthalate PET film.

In an optional embodiment, the protective film may be a composite film characterized by a birefringence effect. For example, the composite film may be a composite material film including a PET film and a TPU film.

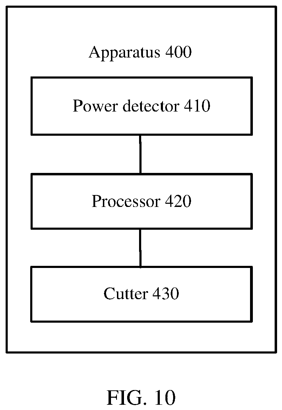

As shown in FIG. 10, an embodiment provides an apparatus for cutting a protective film, including:

a power detector 410, configured to detect power of transmitted light generated when incident light arrives at a third polarizer through a second polarizer and a rotated protective film that is parallel with the second polarizer, and passes through the third polarizer, where the second polarizer and the third polarizer have a same polarization direction, and the protective film is characterized by a birefringence effect;
a processor 420, configured to determine a first fast axis direction or a first slow axis direction of the protective film based on the power of the transmitted light; and
a cutter 430, configured to cut the protective film along the first fast axis direction or the first slow axis direction, to obtain a cut protective film.

In an optional embodiment, the processor 420 is specifically configured to: determine a fast axis direction of the protective film that is corresponding to maximum power of the transmitted light as the first fast axis direction; or determine a slow axis direction of the protective film that is corresponding to maximum power of the transmitted light as the first slow axis direction.

In an optional embodiment, which is not part of the invention but an example for further understanding the invention, after the first fast axis direction or the first slow axis direction of the protective film is determined, the first fast axis direction is parallel with the polarization direction of the second polarizer, and the first slow axis direction is perpendicular to the polarization direction of the second polarizer; or the first fast axis direction is perpendicular to the polarization direction of the second polarizer, and the first slow axis direction is parallel with the polarization direction of the second polarizer.

In an embodiment, which is according to the invention, after the first fast axis direction or the first slow axis direction of the protective film is determined, there is a 45-degree included angle between the polarization direction of the second polarizer and each of the first fast axis direction and the first slow axis direction, and a thickness of the cut protective film satisfies the following formula:

$$(n_{fast} - n_{slow}) * T = 1/2 * m * \lambda ,$$

where

$n_{fast}$ is a refractive index of the fast axis direction of the protective film, $n_{slow}$ is a refractive index of the slow axis direction of the protective film, $T$ is the thickness of the protective film, $m$ is a positive integer, and $\lambda$ is a refractive index.

In an optional embodiment, the cut protective film is attached on a screen of an electronic device that supports under-display fingerprint recognition. A first polarizer in the touchscreen of the electronic device has a same polarization direction as that of the second polarizer.

In an optional embodiment, the protective film is a polyethylene terephthalate PET film.

It can be understood that, for the foregoing embodiments, the first fast axis may be a first axis, and the first slow axis may be a second axis. The first axis may be perpendicular to the second axis.

It can be understood that "parallel" in the foregoing embodiments may be absolutely parallel, or may be approximately parallel. For example, that A is parallel with B may be that a range of an included angle between A and B is [0, b], where a specific value of b varies with products. For example, b may be 4. A may be the first axis (the first fast axis) of the protective film or the second axis (the first slow axis) of the protective film, and B may be the polarization direction of the polarizer (for example, the first polarizer) in the touchscreen (for example, a touchscreen) of the electronic device. For detailed descriptions, refer to the descriptions in the foregoing embodiments.

It can be understood that "perpendicular" in the foregoing embodiments may be absolutely perpendicular, or may be approximately perpendicular. For example, that A is perpendicular to B may be that a range of an included angle between A and B is [90-a, 90+a], where a specific value of a varies with a product. For example, a may be 5. A may be the first axis (for example, the first fast axis) of the protective film or the second axis (for example, the first slow axis) of the protective film, and B may be the polarization direction of the polarizer (for example, the first polarizer) in the touchscreen (for example, a touchscreen) of the electronic device. For detailed descriptions, refer to the descriptions in the foregoing embodiments.

It can be understood that, that there is a 45-degree included angle between the polarization direction of the first polarizer and each of the fast axis direction (a first axis direction) and the slow axis direction (a second axis direction) of the protective film in the foregoing embodiments may be that a range of an included angle between the polarization direction of the first polarizer and each of the fast axis direction (the first axis direction) and the slow axis direction (the second axis direction) of the protective film is [45-c, 45+c], where a specific value of c varies with products. For example, c may be 3. For detailed descriptions, refer to the descriptions in the foregoing embodiments.

It can be understood that, that the fast axis direction of the protective film is parallel with or perpendicular to the polarization direction of the first polarizer in the foregoing embodiments may be that the fast axis of the protective film is parallel with or perpendicular to the polarization direction of the first polarizer. That the slow axis direction of the protective film is parallel with or perpendicular to the polarization direction of the first polarizer in the foregoing embodiments may be that the slow axis of the protective film is parallel with or perpendicular to the polarization direction of the first polarizer. That there is a 45-degree included angle between the polarization direction of the first polarizer and each of the fast axis direction and the slow axis direction of the protective film in the foregoing embodiments may be that there is a 45-degree included angle between the polarization direction of the first polarizer and each of the fast axis and the slow axis of the protective film.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

In addition, functional units in the embodiments of this application may be integrated into one processing unit, or each of the units may exist alone physically, or two or more units may be integrated into one unit.

**Claims**

1. An electronic device, wherein the electronic device supports under-display fingerprint recognition, the electronic device comprises a touchscreen and an optical sensor module, the optical sensor module is disposed under the touchscreen, a protective film is attached on the touchscreen, the protective film comprises a first axis and a second axis, and the first axis is perpendicular to the second axis, wherein

there is a 45-degree included angle between a polarization direction of a first polarizer and each of the first axis and the second axis of the protective film; wherein if there is a 45-degree included angle between the polarization direction of the first polarizer and each of the first axis and the second axis of the protective film, a thickness of the protective film satisfies the following formula:

$$(n_{fast} - n_{slow}) * T = 1/2 * m * \lambda,$$

wherein

$n_{fast}$ is a refractive index of a fast axis direction of the protective film, $n_{slow}$ is a refractive index of a slow axis direction of the protective film, $T$ is the thickness of the protective film, $m$ is a positive integer, and $\lambda$ is a refractive index.

2. The electronic device according to claim 1, wherein light emitted by the touchscreen passes through the protective film and falls on a finger of user, light reflected from fingerprint of the finger passes through the protective film and touchscreen, and is projected onto the optical sensor, the optical sensor converts the light into fingerprint data.

3. The electronic device according to claim 1 or 2, wherein the protective film is a polyethylene terephthalate PET film.

4. The electronic device according to any one of claims 1 to 3, wherein the first axis is a fast axis, and the second axis is a slow axis.

5. The electronic device according to any one of claims 1 to 4, wherein the first polarizer is a polarizer closest to the protective film in the touch screen.

6. The electronic device according to any one of claims 1 to 5, wherein the electronic device is a mobile phone, a watch, or glasses.

**Patentansprüche**

1. Elektronische Vorrichtung, wobei die elektronische Vorrichtung die Unteranzeigefingerabdruckerkennung unterstützt, die elektronische Vorrichtung einen Touchscreen und ein optisches Sensormodul umfasst, wobei das optische Sensormodul unter dem Touchscreen angeordnet ist, eine Schutzfolie auf dem Touchscreen angebracht ist, die Schutzfolie eine erste Achse und eine zweite Achse umfasst und die erste Achse senkrecht zu der zweiten Achse ist, wobei

es einen eingeschlossenen Winkel von 45 Grad zwischen einer Polarisationsrichtung eines ersten Polarisators und jeder der ersten Achse und der zweiten Achse der Schutzfolie gibt; wobei, falls ein eingeschlossener Winkel von 45 Grad zwischen der Polarisationsrichtung des ersten Polarisators und jeder der ersten Achse und der zweiten Achse der Schutzfolie besteht, eine Dicke der Schutzfolie die folgende Formel erfüllt:

$$\left(n_{schnell} - n_{langsam}\right) * T = 1/2 * m * \lambda,$$

wobei

$n_{schnell}$ eine Brechzahl einer Richtung einer schnellen Achse des Schutzfilms ist, $n_{langsam}$ eine Brechzahl einer Richtung einer langsamen Achse des Schutzfilms ist, $T$ die Dicke des Schutzfilms ist, $m$ eine positive ganze Zahl ist und $\lambda$ eine Brechzahl ist.

2. Elektronische Vorrichtung nach Anspruch 1, wobei Licht, das durch den Touchscreen emittiert wird, durch die Schutzfolie hindurchtritt und auf einen Finger des Benutzers fällt, das Licht, das von einem Fingerabdruck des Fingers reflektiert wird, durch die Schutzfolie und den Touchscreen hindurchtritt und auf den optischen Sensor projiziert wird, der optische Sensor das Licht in Fingerabdruckdaten umwandelt.

3. Elektronische Vorrichtung nach Anspruch 1 oder 2, wobei die Schutzfolie eine Polyethylenterephthalat(PET)-Folie ist.

4. Elektronische Vorrichtung nach einem der Ansprüche 1 bis 3, wobei die erste Achse eine schnelle Achse ist und die zweite Achse eine langsame Achse ist.

5. Elektronische Vorrichtung nach einem der Ansprüche 1 bis 4, wobei der erste Polarisator ein Polarisator ist, der dem Schutzfilm in dem Touchscreen am nächsten ist.

6. Elektronische Vorrichtung nach einem der Ansprüche 1 bis 5, wobei die elektronische Vorrichtung ein Mobiltelefon, eine Uhr oder eine Brille ist:

## Revendications

1. Dispositif électronique, dans lequel le dispositif électronique prend en charge la reconnaissance d'empreinte digitales sous-écran, le dispositif électronique comprend un écran tactile et un module de capteur optique, le module de capteur optique est disposé sous l'écran tactile, un film protecteur est fixé sur l'écran tactile, le film protecteur comprend un premier axe et un second axe, et le premier axe est perpendiculaire au second axe, dans lequel il existe un angle inclus de 45 degrés entre une direction de polarisation d'un premier polariseur et chacun du premier axe et du second axe du film protecteur ; dans lequel s'il existe un angle inclus de 45 degrés entre la direction de polarisation du premier polariseur et chacun du premier axe et du second axe du film protecteur, une épaisseur du film protecteur satisfait à la formule suivante :

$$\left(n_{fast} - n_{slow}\right) * T = 1/2 * m * \lambda,$$

où

$n_{fast}$ est un indice de réfraction d'une direction d'axe rapide du film protecteur, $n_{slow}$ est un indice de réfraction d'une direction d'axe lent du film protecteur, $T$ est l'épaisseur du film protecteur, $m$ est un entier positif et $\lambda$ est un indice de réfraction.

2. Dispositif électronique selon la revendication 1, dans lequel la lumière émise par l'écran tactile passe à travers le film protecteur et tombe sur un doigt de l'utilisateur, la lumière réfléchie par l'empreinte digitale du doigt passe à travers le film protecteur et l'écran tactile, et est projetée sur le capteur optique, le capteur optique convertit la lumière en données liées aux empreintes digitales.

3. Dispositif électronique selon la revendication 1 ou 2, dans lequel le film protecteur est un film en polyéthylène téréphtalate, PET.

4. Dispositif électronique selon l'une quelconque des revendications 1 à 3, dans lequel le premier axe est un axe rapide, et le second axe est un axe lent.

5. Dispositif électronique selon l'une quelconque des revendications 1 à 4, dans lequel le premier polariseur est un polariseur le plus proche du film protecteur dans l'écran tactile.

6. Dispositif électronique selon l'une quelconque des revendications 1 à 5, dans lequel le dispositif électronique est un téléphone portable, une montre, ou des lunettes.

FIG. 1

FIG. 2

FIG. 3

**200**

Detect power of transmitted light generated when incident light arrives at a third polarizer through a second polarizer and a rotated protective film that is parallel with the second polarizer, and passes through the third polarizer, where the second polarizer and the third polarizer have a same polarization direction, and the protective film is characterized by a birefringence effect — S210

Determine a first fast axis direction or a first slow axis direction of the protective film based on the power of the transmitted light — S220

Cut the protective film along the first fast axis direction or the first slow axis direction, to obtain a cut protective film — S230

FIG. 4

Incident light

Second polarizer

E

Protective film

K

Third polarizer

FIG. 5

FIG. 6

| | |
|---|---|
| Prior-art protective film | |
| Cover glass | |
| Polarizer | |
| Quarter-wave plate | |
| Touchscreen | |
| Backlight module | |
| Optical sensor | |

Natural light

Circularly polarized light

Linearly polarized light in a horizontal direction

FIG. 7

| | |
|---|---|
| Protective film in this application | |
| Cover glass | |
| Polarizer | |
| Quarter-wave plate | |
| Touchscreen | |
| Backlight module | |
| Optical sensor | |

Natural light

Linearly polarized light in a horizontal direction

FIG. 8

Apparatus 300

Detection unit 310

Determining unit 320

Cutting unit 320

FIG. 9

Apparatus 400

Power detector 410

Processor 420

Cutter 430

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130093982 A
- CN 106156716 A